# EUROPEAN PATENT APPLICATION

(11) **EP 2 362 303 A2**
(43) Date of publication of application: **31.08.2011**
(21) Application number: 11153726.2
(22) Date of filing: 08.02.2011
(51) Int. Cl.: G06F 3/048, G06F 3/01

(54) **Display device**

(30) Priority: 19.02.2010 GB 1002888; 05.01.2011 GB 1100106
(71) Applicant: Sony Europe Limited, Brooklands Weybridge Surrey KT13 0XW (GB)
(72) Inventor: Meyvis, Francis Marie, 9200, Oudegem (BE); Rose, Nicolas Pierre, Basingstoke, Hampshire RG25 3NL (GB)
(74) Representative: Smith, Samuel Leonard

(57) **Abstract**

A display device including a display driver configured to drive a display to display images, a controller configured to control the display driver to drive the display to display an array of selectable items, and a user interface including at least one movement sensor configured to determine movement of the user interface. The controller is configured to control the display driver to drive the display to display, at any one time, one item of the array of selectable items at an increased magnification greater than the remaining items of the array of selectable items and to selectively vary which item of the array of selectable items is displayed at increased magnification. The controller is configured to vary which item of the array of selectable items is displayed at increased magnification in response to movement determined by the at least one sensor.

## Description

The present application relates to a display device and also to a method of displaying an array of selectable items.

Many forms of graphical user interface have been developed providing many types of information, such as tiles and icons on a display for selection. It is known to scroll through these items so as to find the required item for selection. Selection may be achieved by moving highlighting of an item for selection and/or scrolling items through a region, the item positioned in that region at any one time being available for selection.

It is also known to provide such a graphical user interface on a touch-sensitive display enabling a user to select a particular item merely by touching the display screen at the position of the item required for selection.

Such touch-sensitive display screens have been incorporated in devices such as mobile telephones. A virtual alphanumeric keypad may be displayed and a user may enter letters and numbers as required by touching the display screen at positions of the virtual keys to be selected.

Displaying an entire keyboard (for instance having an azerty or querty layout) on a small display screen requires the individual keys of the keyboard to be relatively small such that selection of the required keys can become difficult for a user.

According to the present invention, there is provided a method of displaying an array of selectable items, the method including:
displaying an array of selectable items;
displaying initially an initial screen of the array of selectable items;
displaying, at any one time, at least one item of the array of selectable items at an increased magnification greater than the remaining items of the array of selectable items;
detecting movement of a user interface including a user operable input;
in response to the detected movement, moving from the initial screen of the array of selectable items and selectively varying which at least one item of the array of selectable items is displayed at increased magnification; and
in response to operation of the user operable input selecting an item displayed at increased magnification at the time of operation of the user operable input, displaying the initial screen of the array of selectable items.

According to the present invention, there is also provided a display device including:
a display driver configured to drive a display to display images;
a controller configured to control the display driver to drive the display to display an array of selectable items and configured to control the display driver initially to drive the display to display an initial screen of the array of selectable items; and
a user interface including at least one movement sensor configured to determine movement of the user interface and including a user operable input; wherein
the controller is configured to control the display driver to drive the display to display, at any one time, at least one item of the array of selectable items at an increased magnification greater than the remaining items of the array of selectable items and to selectively vary which at least one item of the array of selectable items is displayed at increased magnification;
in response to movement determined by the at least one sensor, the controller is configured to move from the initial screen of the array of selectable items and to vary which at least one item of the array of selectable items is displayed at increased magnification; and
the controller is configured to be responsive to operation of the user operable input to select an item displayed at increased magnification at the time of operation of the user operable input and then control the display driver to drive the display to display said initial screen of the array of selectable items.

In this way, at any one time, one item or a group of items is presented to the user for selection and that item or group is displayed with a size/scale larger than the other displayed items. This makes it clear to the user which item(s) is available for selection. Navigation around all of the available selectable items is achieved by moving the user interface. In response to the movement determined by a movement sensor of the user interface, different ones of the selectable items are shown as the item(s) with increased magnification.

Furthermore, after operation of the user operable input to select an item displayed at increased magnification, the display returns to the initial screen of the array of selectable items. In this way, after each operation to select a displayed item, the user is returned to an expected and convenient starting point for selecting the next item.

The initial screen of the array of selectable items may be display of the entire array of selectable items. Alternatively, the initial screen of the array of selectable items may be display of a part of the array of selectable items. In this way, it may be more convenient for the user to find the next item required for selection, particularly where the next item is positioned at a different area of the entire array of selectable items.

The initial screen may include designation of one of the items of the array of selectable items as an initial item by displaying that one item of the array of selectable items at an increased magnification.

Thus, after selecting an item, the display returns to an initial screen in which an initial item is displayed with an increased magnification. The user can then navigate from that initial item to the desired item for subsequent selection. By returning to the initial item, it becomes more convenient for a user to move between consecutive items for selection, particularly where those items occur in different areas of the entire array of selectable items.

The one item designated as the initial item may be pre-set, such that after each selection of an item, display returns to the initial screen including designation of that pre-set item as an initial item. Preferably, the pre-set item is set at a convenient position for moving to any required selectable item, for instance towards the centre of the entire array of selectable items.

Alternatively, the one item designated as the initial item may be calculated by the controller on the basis of items selected previously in response to operation of the user operable input. Thus, for example, where the items represent characters of the alphabet, the controller may predict what character is likely to be selected next by a user on the basis of words conforming to the spelling of characters previously entered by the user and may select the predicted character as the initial item. In this way, in general, the item displayed as the initial item with increased magnification will be the items required next by the user.

The display may be a touch sensitive display. The controller may be configured to receive, from that display, information indicating a position at which a user has touched the display. The controller may judge an item displayed at increased magnification as selected when the information indicates that the display has been touched at the position of an item displayed at increased magnification.

Because items to be selected are displayed with a relatively large scale, use of the touch-sensitive display is facilitated. In particular, it becomes easier for a user to see and then select a particular item for selection.

The controller may be configured to control the display driver to drive the display to display the remaining items with all the same (lower) magnification. Alternatively, the remaining items may be displayed with a variety of lower sizes or magnifications, for instance with the sizes of items reducing as items are positioned further from the at least one item of increased magnification.

The controller may be configured to control the display driver to drive the display to display successively, as the at least one item of increased magnification, adjacent items of the array of selectable items according to movement determined by the at least one sensor.

The position of where an item or group of items is displayed with increased magnification may remain fixed relative to the overall display. With this arrangement, the displayed items move relative to the overall display so as to vary which individual item(s) becomes the at least one item of increased magnification. It is also possible for the position of the item or group of items of increased magnification to change as the item or group of items selected as the at least one item of increased magnification is varied. In particular, with movement in a particular direction, adjacent items of the array are successively taken as the at least one item of greater magnification such that the position on the overall display where the at least one item of increased magnification is located moves between those adjacent items relative to the overall display.

The at least one sensor may be configured to detect tilting. Additionally or alternatively, the sensor may be configured to detect movement or acceleration. Also, in some embodiments the at least one sensor is configured to detect tilting or movement in two mutually orthogonal directions.

In this way, the at least one sensor may detect tilting of the user interface either left or right and may additionally detect tilting of the user interface either forwards or backwards. Similarly, the at least one sensor may be configured to detect simple linear movement of the user interface left or right and also simple linear movement of the user interface forwards and backwards. It is expected that the movements left, right, forwards and backwards will be directions in the plane of the display where the display is provided in the user interface itself. However, other orthogonal directions may also be possible.

The controller may be configured to control the display driver to drive the display to display successively, as the at least one item of increased magnification, items of the array of selectable items which are adjacent in respective directions corresponding to the orthogonal directions detectable by the at least one sensor.

In this way, for a two dimensional array of items extending in the x direction and the y direction, tilting/movement of the user interface from side to side (left or right) enables navigation through the selectable items by moving the area of magnification relative to the selectable items in the x direction. Similarly, movement/tilting of the interface forwards or backwards enables navigation through the array of selectable items by moving the area of magnification relative to the selectable items in the y direction.

The controller may be configured to control the display driver to drive the display to display only a part of the array of selectable items at any one time and to selectively vary which part of the array of selectable items is displayed.

In other words, when a very large number of selectable items are provided in one or both directions, it would be possible to display only a limited number of items around the one item of increased magnification.

The controller may be configured to vary which part of the array of selectable items is displayed in response to movement determined by the at least one sensor.

In this way, as the area of magnification moves relative to the array of selectable items, the group of selectable items to be displayed moves in a corresponding manner.

The items may include icons, tiles or selectable keys. For example, the keys may form part of a virtual keyboard, for instance having the azerty or querty layout.

The display device may be provided for use with an external display. Alternatively, the display device may itself be provided with a display configured to be driven by the display driver.

The display device may include the display, the display driver, the controller and the user interface housed in a single unit. The single unit may take many forms, for instance that of a mobile telephone, a portable games machine or a media player.

By tilting or moving the unit, the display automatically navigates around the array of selectable items, highlighting one or a group of those items for selection by providing it with a magnification to increase the size with which it is displayed. The method of displaying the array of selectable items may be embodied in software.

The invention will be more clearly understood from the following description, given by way of example only, with reference to the accompanying drawings, in which:
Figure 1 illustrates an embodiment of the present invention;
Figure 2 illustrates an embodiment of the present invention;
Figure 3 illustrates an embodiment of the present invention;
Figure 4 illustrates schematically component parts of an embodiment of the present invention;
Figures 5 and 6 illustrate navigation according to one example of the present invention;
Figures 7 and 8 illustrate navigation according to another example of the present invention;
Figure 9 illustrates use of the present invention with a task bar;
Figures 10(a) and (b) illustrate tilting movement for use with the present invention;
Figures 11 (a) and (b) illustrate linear movement for use with the present invention;
Figures 12 and 13 illustrate navigation according to an example of the present invention; and
Figures 14(a), (b) and (c) illustrate groups of magnified keys.

The present invention may be embodied in any device movable by a user to control navigation around a displayed array of selectable items.

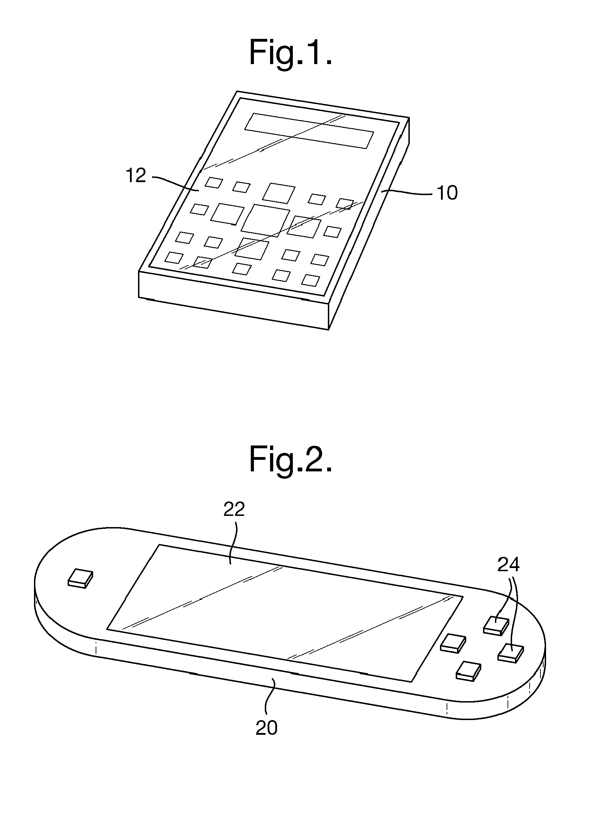

In Figure 1, a single unit, such as a mobile telephone, is illustrated. The unit 10 is provided, on an upper surface, with a display 12 which, in this embodiment, is touch-sensitive. Figure 2 illustrates another embodiment in which a single unit is provided. This unit 20 may be arranged as a personal games machine. As illustrated, it includes a display 22 and also a plurality of user-operable inputs 24.

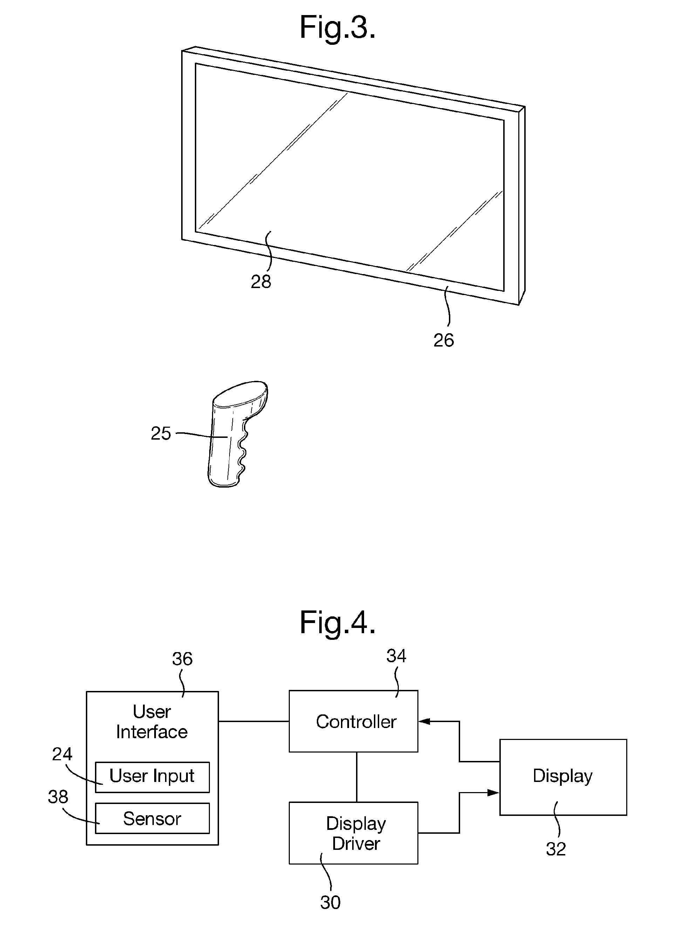

Figure 3 illustrates an alternative embodiment in which a handset 25 is provided separately from a unit 26 having a display 28. The handset 25 may be connected to the unit 26 by wire or wirelessly. This arrangement may be particularly advantageous as a games console.

Figure 4 illustrates schematically component parts of a display device embodying the present invention.

As illustrated, a display driver 30 is provided for driving, in any appropriate manner, a display 32 so as to display images as required. The display driver 30 may be embodied in software and/or hardware. It is configured for use with a particular respective display at any one time but may be reconfigurable for use with different displays. It receives signals representing images for display and provides appropriate corresponding signals to a display so as to cause that display to display the images. It may take account of the definition (number of pixels) and/or frame rate available with the display. In some instances, it may also take account of bias and control signals/voltages required by a display.

The display 32 may be provided separately or, with embodiments such as illustrated in Figures 1 and 2, together with the other components of the display device.

A controller 34 controls the display driver and controls what images are to be displayed on the display 32. The controller 34 may be capable of controlling the display driver 30 to drive the display 32 to display many different types of image according to various functions of the display device not considered here and not essential to the present invention. As part of the present invention, the controller deals with the plurality of selectable items. It causes representations of these items to be displayed on the display 32 in an array as required. The items may be tiles or icons. There may be a plurality of selectable items along a task bar on a display. According to one embodiment, the items are the keys of a keyboard, such as an azerty or querty keyboard and/or a number pad/calculator keys.

As will be explained further below, the controller 34 controls the display device 30 to drive the display 32 to display the array of selectable items with a variable one or variable group of the items displayed with an increased magnification resulting in a greater size.

The display device also includes a user interface 36 including at least one sensor 38 for determining movement of the user interface 36.

The user interface 36 may be provided as a separate component, such as the user handset 25 as illustrated in Figure 3, merely for providing movement information to the controller 34 in order to control the display device. However, the user interface 36 may be provided with the controller 34, display driver 30 and display 32 as a single unit, for instance as illustrated in Figures 1 and 2.

The sensor may provide information or data signals to a processor. The sensor itself may include a processor, which processor may be specific to performing sensor related functions. Alternatively, the processor may be a general function processor which handles some or all additional functionalities in a device. In some embodiments, for instance a games console embodiment, the sensor may have a processor in a game controller, (connected to the main console by e.g. Bluetooth); a main processor, which deals with the display in the console, handles the magnification.

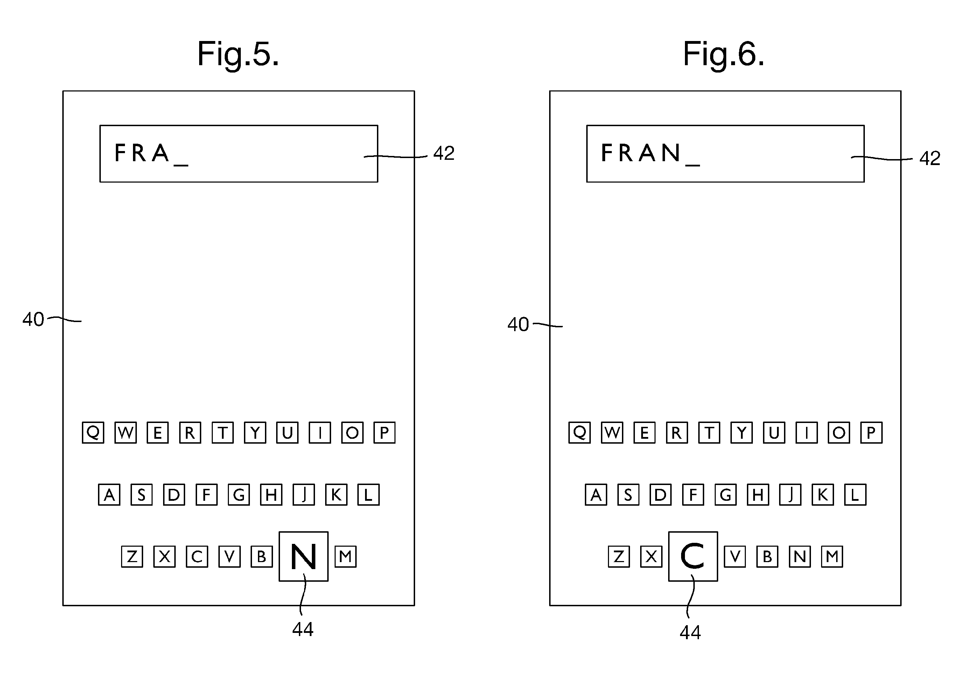

Figure 5 illustrates an example of what might be displayed on the displays 12, 22, 32 under the control of the controller 34.

A virtual keyboard 40 is displayed at a lower portion and a text entry box 42 is displayed at an upper portion. The virtual keyboard 40 is made up of an array of selectable items, each item taking the form of a virtual key. The controller controls the display driver 30 so that one of the keys 44 is displayed in a magnified state. The key that is magnified is available for selection. As illustrated, the key "N" is magnified and available for selection.

If the user selects the current magnified and selectable key "N", this appears in the text entry box 42.

The controller 34 is responsive to movement sensed by the sensor or sensors 38 of the user interface 36. In particular, by moving or tilting the user interface 36 left or right, it is possible to move the magnified area of the virtual keyboard 40 from left to right. Similarly, by moving or tilting the user interface forwards or backwards, it is possible to move the magnified area of the virtual keyboard 40 up or down.

Following on from the example of Figure 5, by tilting or moving the user interface to the left, the display moves to a display as illustrated in Figure 6 with the selectable and magnified key 44 now being the key "C".

During the course of the tilt action by the user the items in the area located spatially between a first item and a second item which is intended to be magnified for selection may temporarily magnified sequentially one after the other to provide a user with an indication of the strength of the tilt applied by the user. This may be accompanied by some audio feedback for example imitating a reader flicking through pages of a book.

The controller 34 may also provide for a nudge function such that when a user finds that not quite the right key is magnified, it becomes possible to use physical keys or a swipe gesture on the touch screen to nudge the magnification into the right position. This could also be done by shaking or tapping the side of the physical device acting as the user interface. The physical button (arrow keys) would most likely apply here when using a games console controller. Thus, if "A" was magnified, and the user wanted S, the user would press the right arrow or cursor key. This allows a user to apply a correction to an inaccurate movement.

It is also possible to configure the system so as to allocate a gesture, movement or a function key to temporarily lock or hold the magnification around the key selected according to sensor movement so that the device can be returned to a balance position for user selection of the magnified keys. It may be more user friendly to operate the device in its balance position. In one embodiment, where only lateral movements are detected, the movement in a second orthogonal direct could be detected to freeze the magnification temporarily and allow the user to return it to the balance position for operation. After return to the balance position, the temporary freeze could be released. In some embodiments, the acceleration of the sensor can be detected to move more quickly to a part of the array that is further away from the balance point. A very rapid movement to the left or right bringing the device back to a balance point could be used as an indicator to freeze the position of the magnification. Two very rapid movements could release the magnification and return it to a central item in the array.

In other embodiments the increased magnification of a virtual key intended for selection in the balance position of the device may be preset to a particular virtual key as part of an initial screen of the array of selectable items. In the case of a virtual QWERTY keyboard, magnification may be applied to the letter "T" or "Y". The preset balance position items may be configurable in user settings for the device. It may be set to a key or item that is used relatively more often than others. It may be set to a key or item that is located at or near the centre of an array of items.

Since the layout of QWERTY keyboards has been determined by wide separation that appear adjacent to one another in common words to avoid jamming in a mechanical typewriter, the present invention, when for example applied to an alphanumeric virtual keyboard may require some degree of dexterity in selecting the next desired letter when typing or entering a word. In particular numerous tilting actions from one side to another may be required. An example follows: a user may wish to enter or type the word SPADE using a virtual alphanumeric keyboard of the present invention. The keyboard layout is QWERTY, for example. The user will tilt the device to the left to find/magnify the "S" virtual key, the "S" and optionally keys around it will appear magnified for selection. The user will select "S" for entry into the text box 42. The user then needs to tilt the device to the right towards to find/magnify the "P" virtual key. The "P" key and optionally those around it are magnified and the user selects the "P" key for entry into the text box 42. The user then needs to tilt the device to the left again to find/magnify the "A" virtual key. The "A" key and optionally those around it are magnified and the user selects the "A" key for entry into the text box 42. This requires some dexterity to move the angle of tilt from right to left.

The amount of tilt required may be reduced by, immediately after selecting the "S" virtual key and entering it into text box 42, to have the driver configured under the control of the controller such that the magnification is applied to a particular virtual key. For example, the magnification may return to a key at or near the centre of the virtual keyboard such as "T". Magnification may be applied to a group of virtual keys such as T, G, B. The automatic return of magnification to particular virtual keys or items enables the user to navigate the virtual keyboard more efficiently, for example requiring more gentle tilt actions. In embodiments when only a part of the virtual keyboard or array is displayed (for example a left hand side) when the device is tilted, the automatic return of magnification to a particular key assists the user in finding the next letter for entry, by returning to a known position or expected in the array or keyboard for the user. It will be appreciated that the particular key or item to which magnification is returned after text entry may be preset and coded in software or hardware logic in the device, it may be customisable in user settings of the device or it may be predetermined dynamically, e.g. according to known predictive textual entry algorithms. This would offer a user similar advantages in reducing tilt operations. In some embodiments a mixture of scenarios could be used. For example when entering the word "SPECIALLY", the magnification may be returned to a predetermined position (e.g. in the centre) of the virtual keyboard after typing the first "L" since predictive algorithm then doesn't know whether the user will next type an "S" for "SPECIALS" or an "L" for "SPECIALLY". Once the second "L" is typed, the predictive algorithms is configured to determine with some strong degree of likelihood that the next expected letter will be "Y", so the magnification after the entry of the second "L" will be applied to "Y" automatically.

Alternatively, the initial screen of array of selectable items, in the balanced position of the device, need not include any particular initial item displayed with increased magnification. The initial screen may comprise display of the entire array of selectable items or only a part of the array of selectable items. Such an arrangement has similar advantages in presenting the user with an expected and convenient starting point for selecting an item, subsequent to selection of a previous item. Successive items may be displayed with increased magnification as soon as a user operates the device to vary which item is displayed at increased magnification and to select an item.

As illustrated in Figures 5 and 6, the keys surrounding the magnified key 44 are all in the same lower or unmagnified state. However, it is also possible for intermediate sizes or magnifications to be provided to keys immediately surrounding the magnified key 44, for instance as visible on the display 12 in Figure 1.

With embodiments such as that illustrated in Figure 1, the display itself may be touch-sensitive. By touching the display, selection may be achieved. Thus, for the example of Figure 5, when a user touches the magnified key 44, the letter "N" is selected and entered in the text box 42. In this respect, as illustrated in Figure 5, the controller may be responsive to the display 32 and may receive information from the display 32 regarding the position at which the display is touched.

Alternatively or additionally, with embodiments, such as illustrated in Figure 2, a user input 24 may be operated to cause selection of the key which is currently magnified. Hence, with the example of Figure 5, operation of the user input 24 would cause selection of the magnified key 44, such that the letter "N" would be entered in the text box 42.

Where a touch sensitive display is used, it is possible for only the target item of greatest magnification to be active and available for selection. It is also possible for the surrounding or all visible items also to be active and available for selection. In some embodiments, touch sensitive displays may be sensitive to the amount of pressure or able to distinguish between a user's gentle touch or a more forceful poke or force over a short time. With such embodiments, it is possible that the device will require greater pressure or a more forceful poke for items surrounding the magnified item. This provides a way of implicitly confirming that a user really means to select the item rather than the magnified item. Where surrounding items have intermediate sizes or magnifications (see Figure 1), it is possible that intermediate pressure or pokes are required to select those items.

In the examples described above, all of the items of the array of selectable items are displayed simultaneously with one of those items displayed in a magnified state. It is also possible for the controller 34 to operate such that only a group of the full array of selectable items is displayed at any one time.

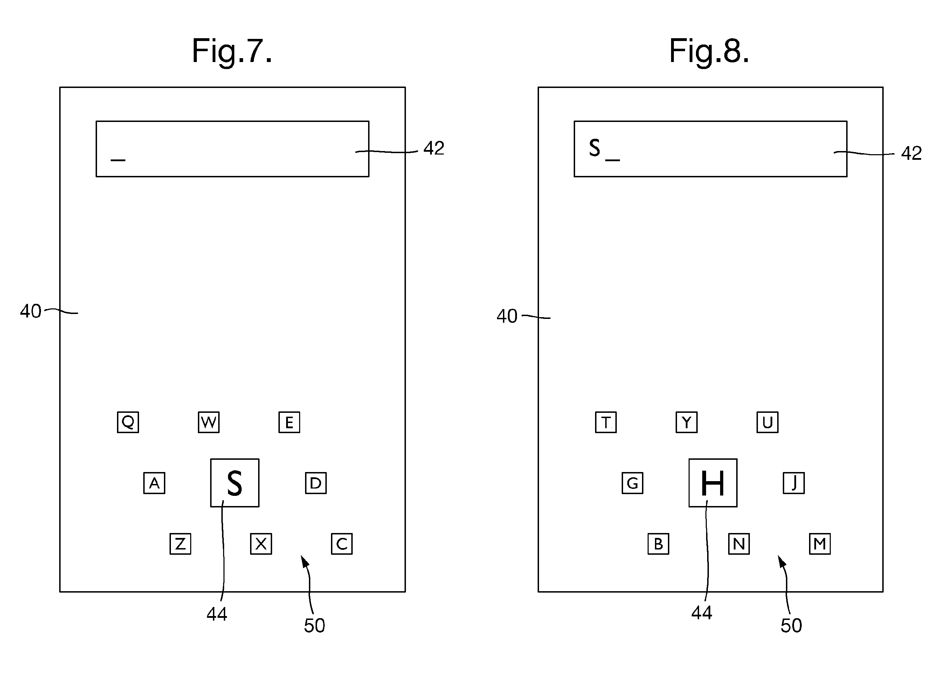

Figure 7 illustrates an example of the display of only part 50 of a virtual keyboard. Having selected the magnified key 44, the letter "S" is added to the text entry box 42. Then, as illustrated in Figure 8, when a user navigates the virtual keyboard by moving the magnified area, the corresponding group 50 of virtual keys are changed accordingly.

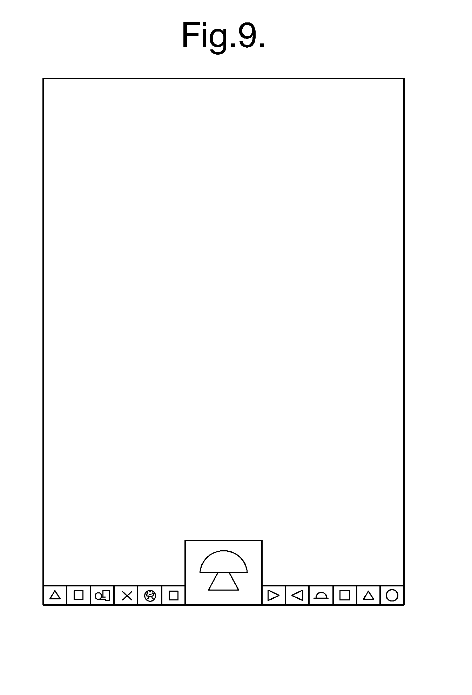

Figure 9 illustrates an example where display and movement of a magnified item is used for selection of items in a horizontal task bar. For completeness, it should be noted that an additional row of items could be located off-screen below those illustrated in Figure 9. By moving the user interface accordingly in an up/down or forward/backward motion, the second row of items may be displayed, with one of those items becoming the magnified item.

The at least one sensor 38 used in the user interface 36 may be of any appropriate or known design, for instance using one or more accelerometers. In some embodiments, the at least one sensor is able to sense two orthogonal directions, for instance by means of tilting or simple linear motion.

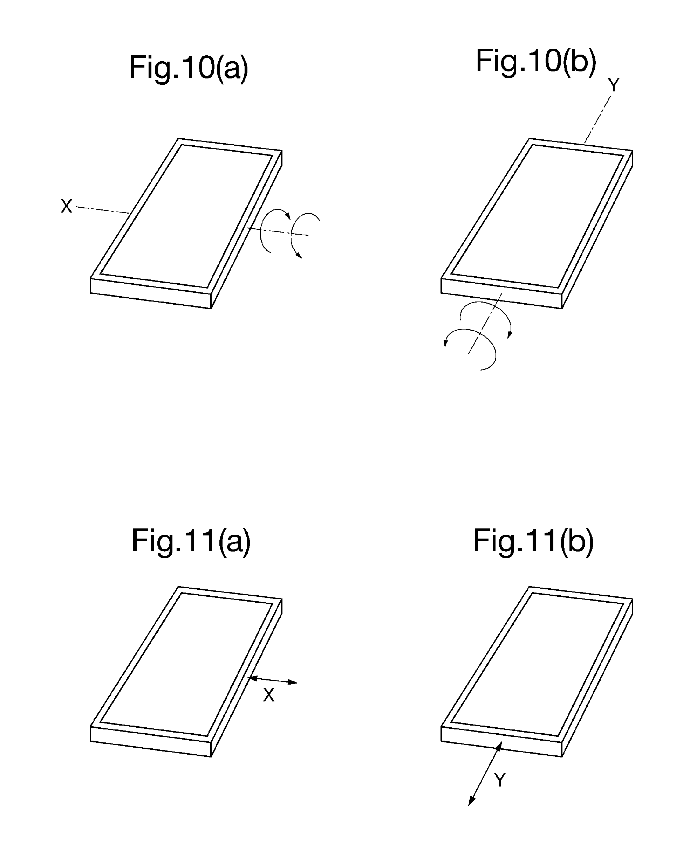

Figures 10(a) and (b) illustrate respectively tilting forward/backwards about an axis X and tilting left and right about an axis Y. On the other hand, Figures 10(a) and (b) illustrate simple linear movement of the user interface in the X direction and simple linear movement of the user interface in the Y direction.

Where a display is provided with the user interface as part of a single unit, for instance as illustrated in the embodiment of Figure 1, it is clearly advantageous that, as the user views the device, tilting about the Y axis or moving in the X direction causes corresponding navigation in the X direction and tilting about the X axis or movement in the Y direction causes corresponding navigation in the Y direction.

The method and device described above have been described in relation to providing only one item as the magnified item for selection. However, it is also possible to provide a relatively small plurality (less than the overall plurality) of items in a magnified state for selection. It has been described that one item could be provided in the magnified state for selection with other items around it in a intermediate magnification state, perhaps requiring greater effort from the user to achieve selection. However, a small group of adjacent keys may be provided with the same (largest) magnification and be available equally for selection.

This can be particularly advantageous when the overall array of selectable items extends in a first direction much more than in a second direction. In this situation, it is possible to have some or all of adjacent items in the second direction chosen as a group for magnification.

For a keyboard which has a large number of keys in the horizontal direction, but a relatively small number of keys in the vertical direction, it may be difficult to provide a full display of keys at a magnification allowing a user easily to select keys as required. By magnifying a substantially vertical group of adj acent keys, whilst leaving the remaining keys with lower magnification, the present invention allows a user easily to see and select keys as required. In the same manner as described above, by tilting or moving side to side, it is possible to move the magnified group of keys along the keyboard in a horizontal direction.

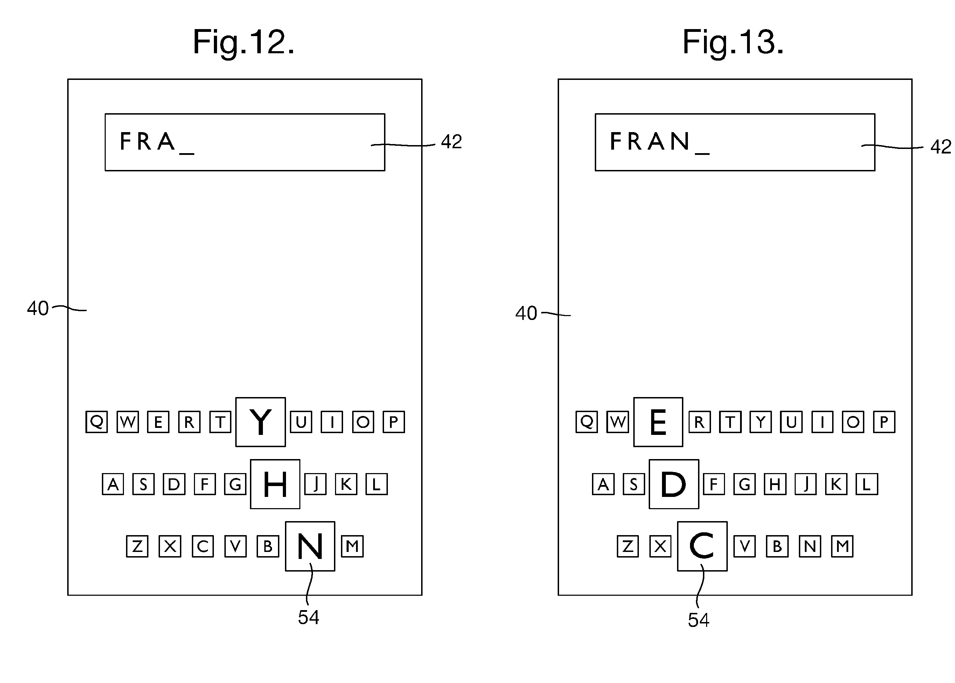

Figures 12 and 13 illustrate this embodiment as a variation to the illustration given in Figures 5 and 6. As can be seen, rather than move an individual magnified key 44, it is possible to move a group of magnified keys 54. For a touch sensitive screen, it is possible merely for the user to touch the desired one of the group of magnified keys 54. For an arrangement using user inputs, it would be possible to provide individual respective inputs for the magnified keys of the group 54.

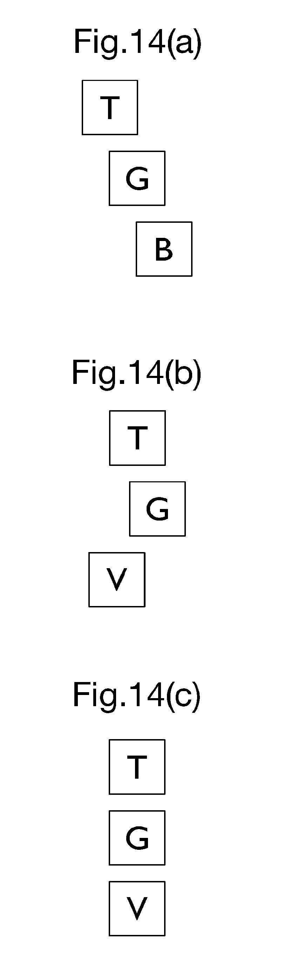

The adjacent keys of a group could be chosen in a variety of ways, for instance as illustrated in Figures 14(a), (b) and (c). The example of Figure 14(c) applies to a device where the keys are not offset in a traditional manner.

Finally, it should be noted that combinations of the embodiments and combinations of parts of respective embodiments are still possible within the scope of the present invention.

## Claims

1. A display device including:
a display driver configured to drive a display to display images;
a controller configured to control the display driver to drive the display to display an array of selectable items and configured to control the display driver initially to drive the display to display an initial screen of the array of selectable items; and
a user interface including at least one movement sensor configured to determine movement of the user interface and including a user operable input; wherein
the controller is configured to control the display driver to drive the display to display, at any one time, at least one item of the array of selectable items at an increased magnification greater than the remaining items of the array of selectable items and to selectively vary which at least one item of the array of selectable items is displayed at increased magnification;
in response to movement determined by the at least one sensor, the controller is configured to control the display driver to change from the initial screen of the array of selectable items and to vary which at least one item of the array of selectable items is displayed at increased magnification; and
the controller is configured to be responsive to operation of the user operable input to select an item displayed at increased magnification at the time of operation of the user operable input and then control the display driver to drive the display to display said initial screen of the array of selectable items.

2. A display device according to claim 1 wherein:
the initial screen of the array of selectable items comprises display of the entire array of selectable items or a part of the array of selectable items.

3. A display device according to claim 1 or 2 wherein:
the initial screen includes designation of one of the items of the array of selectable items as an initial item by displaying said one item of the array of selectable items at an increased magnification.

4. A display device according to claim 3 wherein:
the one item designated as the initial item is either preset or calculated by the controller on the basis of items selected previously in response to operation of the user operable input.

5. A display device according to any preceding claim wherein:
the controller is configured to control the display driver to drive the display to display successively, as the at least one item of increased magnification, adjacent items of the array of selectable items according to movement determined by the at least one sensor.

6. A display device according to claim 5 wherein:
the at least one sensor is configured to detect at least one of tilting and movement in two mutually orthogonal directions; and
the controller is configured to control the display driver to drive the display to display successively, as the at least one item of increased magnification, items of the array of selectable items which are adjacent in respective directions corresponding to the orthogonal directions detectable by the at least one sensor.

7. A display device according to any preceding claim wherein:
the controller is configured to control the display driver to drive the display to display only a part of the array of selectable items at any one time and to selectively vary which part of the array of selectable items is displayed preferably in response to movement determined by the at least one sensor.

8. A display device according to any preceding claim wherein:
the controller is configured to receive, from the display, information indicating a position at which a user has touched the display and is configured to judge an item displayed at increased magnification as selected when said information indicates that the display has been touched at the position of the item displayed at increased magnification.

9. A display device according to any preceding claim wherein:
the at least one item comprises a group of two or more adjacent items.

10. A display device according to any preceding claim wherein:
the array of selectable items includes one of:
an array of selectable icons;
an array of selectable tiles; and
a virtual keyboard having an array of selectable keys.

11. A display device according to any preceding claim further including:
a display configured to be driven by the display driver to display the array of selectable items.

12. A display device according to claim 11 wherein:
the display, the display driver, the controller and the user interface are housed in a single unit such as any one of a mobile telephone, a portable games machine and a media player.

13. A method of displaying an array of selectable items, the method including:
displaying an array of selectable items;
displaying initially an initial screen of the array of selectable items;
displaying, at any one time, at least one item of the array of selectable items at an increased magnification greater than the remaining items of the array of selectable items;
detecting movement of a user interface including a user operable input;
in response to the detected movement, moving from the initial screen of the array of selectable items and selectively varying which at least one item of the array of selectable items is displayed at increased magnification; and
in response to operation of the user operable input selecting an item displayed at increased magnification at the time of operation of the user operable input, displaying the initial screen of the array of selectable items.

14. A computer program comprising program code means for performing all the steps of claim 13 when said program is run on a computer.

15. A computer program product comprising program code means stored on a computer readable medium for performing the method of claim 13 when said program product is run on a computer.
